# FASCICULE DE BREVET EUROPEEN

(11) **EP 4 447 850 B1**
(45) Date de publication et mention de la délivrance du brevet: **04.02.2026**
(21) Numéro de dépôt: 22847565.3
(22) Date de dépôt: 16.12.2022
(51) Int. Cl.: A61C 9/00, A61C 19/04, A61C 19/05

(54) **PIÈCE INTER-ARCADES (PIA), UTILISATION D'UNE TELLE PIA ET PROCÉDÉ DE FABRICATION D'UNE PROTECTION INTRA-BUCCALE (PIB) AVEC UNE TELLE PIA**
ZWISCHENBOGENKOMPONENTE (ZBK), VERWENDUNG EINER SOLCHEN ZBK SOWIE VERFAHREN ZUR HERSTELLUNG EINES INTRAORALEN PROTEKTORS (IOP) MIT EINER SOLCHEN ZBK
INTER-ARCH COMPONENT (IAC), USE OF SUCH AN IAC, AND METHOD FOR PRODUCING AN INTRAORAL PROTECTOR (IOP) WITH SUCH AN IAC

(30) Priorité: 17.12.2021 FR 2113793
(43) Date de publication de la demande: 23.10.2024
(73) Titulaire: Université de Bordeaux, 33000 Bordeaux (FR); Centre Hospitalier Universitaire de Bordeaux, 33404 Talence Cedex (FR)
(72) Inventeur: POISSON, Philippe, 33660 Saint-Seurin-sur-l'Isle (FR)
(74) Mandataire: Santarelli
(86) Numéro de dépôt international: PCT/FR2022/052392
(87) Numéro de publication internationale: WO 2023/111479

(56) Documents cités:
- US-A- 4 979 519

## Description

L'invention concerne une pièce inter-arcades (PIA) pour prise d'empreinte numérisée.

Elle s'inscrit dans un domaine général d'appareillage intra-buccal, notamment dans le milieu sportif, par exemple pour la prévention d'un traumatisme bucco-dentaire par une protection intra-buccale (PIB) ou dans le milieu médical, par exemple pour le traitement d'un trouble occlusal par une orthèse.

Une protection intra-buccale (PIB) est un équipement de protection individuelle (EPI) qui permet de maintenir une position mandibulaire fonctionnelle précise et facilement reproductible pour apporter au sportif, quelle que soit sa typologie dento-maxillo-faciale, une aptitude de ventilation durant son exercice tout en ayant ses mâchoires serrées. Une PIB est un dispositif qui vit le jour dans les années 1890 en Angleterre et avait, à l'origine, pour objectif de protéger les pratiquants de boxe anglaise de coupures aux lèvres occasionnées par leur activité sportive.

La PIB a évolué pour devenir tout d'abord une protection des structures buccodentaires et maxillaires, puis son rôle s'est étendu à la prévention des commotions cérébrales et des traumatismes cervicaux durant la pratique de sports à risques.

Une PIB a donc, entre autres, pour fonction :
- de réduire le risque de lésion des tissus mous (la langue, les lèvres et les joues) ;
- de réduire le risque de lésion des dents antérieures maxillaires ;
- de réduire le risque de lésion buccodentaire par choc violent inter-arcades ;
- de réduire le risque de commotion cérébrale ; ou encore
- de réduire le risque d'atteinte cervicale.

Une PIB a de plus, entre autres, pour propriétés :
- d'occuper les espaces édentés ;
- de permettre un engrènement des arcades dentaires mandibulaire et maxillaire ;
- d'être confortable ;
- de ne pas présenter de saillie, ni de rugosité ;
- d'être rétentive ;
- d'absorber et dissiper l'énergie d'impact ;
- de permettre la phonation ;
- de permettre la ventilation buccale mâchoires serrées.

On entend par « rétentive » la capacité de la PIB à rester en place quand l'utilisateur ouvre la bouche.

On entend par « engrènement » la pénétration des dents antagonistes dans le bourrelet occlusal de la gouttière de la PIB pour obtenir le calage des arcades mandibulaire et maxillaire.

On entend par « phonation » la capacité de l'utilisateur à pouvoir s'exprimer oralement. Trois types de PIB sont actuellement couramment proposés :
- Type I : modèle standard, uni ou bi-maxillaires. Il s'agit d'une PIB prête à l'emploi. Une telle PIB présente cependant comme inconvénients de ne pas permettre l'engrènement des arcades dentaires mandibulaire et maxillaire, de gêner la ventilation du sportif, de ne pas être rétentive, avec un risque que la protection s'échappe durant l'effort et qu'elle se coince dans les voies aériennes du sportif.
- Type II : modèle adaptable, uni ou bi-maxillaires, Il s'agit d'une PIB apte à être mise en forme dans la bouche de l'utilisateur par exemple après ramollissement du matériau qui la compose. Une telle PIB peut cependant présenter comme inconvénients de perdre jusqu'à 99% d'épaisseur lors de l'adaptation en bouche, ce qui limite l'absorption et la dissipation de l'énergie d'impact, et/ou de limiter la ventilation buccale mâchoires serrées.
- Type III : modèle sur mesure. Il s'agit d'une PIB réalisée après prise d'empreintes, sous la responsabilité d'un chirurgien-dentiste, des arcades dentaires mandibulaire et maxillaire de l'utilisateur. Le mode de préparation (sur mesure) doit permettre la confection d'une PIB de haute qualité conforme aux exigences essentielles de santé et de sécurité reconnues pour un tel EPI. Cependant, en fonction des opérateurs, certaines de ces PIB de type III peuvent présenter une qualité inférieure à des modèles de type Il en terme d'épaisseur de matériau et d'aptitude de ventilation mâchoires serrées. De telles PIB peuvent donc induire une ventilation mâchoires serrées réduite et lors d'une activité dynamique, provoquer une hypoxie, avec altération de la performance, ou provoquer une ouverture buccale destinée à compenser la dette ventilatoire avec un risque exacerbé de traumatisme mandibulaire. Enfin, la position mandibulaire d'engrènement peut aussi être définie de façon aléatoire, sans tenir compte de l'ouverture buccale physiologique de chaque individu.

Une PIB doit donc permettre du mieux possible une ventilation satisfaisante mâchoires serrées, tout en assurant une stabilité du positionnement de la mandibule.

A ces fins, il est donc intéressant de pouvoir fabriquer une PIB sur-mesure, en particulier grâce à un procédé au moins en partie numérisée.

Pour cela, un tel procédé comporte par exemple une étape d'enregistrement, par exemple par une caméra intra-buccale, de l'arcade dentaire maxillaire, de l'arcade dentaire mandibulaire et, enfin, de la position d'engrènement entre ces deux arcades. Cependant, la position d'engrènement impose une augmentation de dimension verticale importante pour construire une PIB sur mesure avec un aménagement d'un espace de ventilation et, ainsi, être en conformité avec les données scientifiques actuelles, par exemple avec la norme Afnor XP S72-427. Cette augmentation de dimension verticale apporte des contraintes techniques pour un enregistrement numérisé, notamment par exemple parce qu'elle peut induire une position d'engrènement mandibulo-maxillaire instable et non reproductible, et/ou une impossibilité technique de scanner un espace libre entre les deux arcades.

Le document US 4 979 519 A divulgue un système d'aide aux mesures céphalométriques.

L'invention vise à remédier au moins en partie à ces inconvénients, en pouvant en outre mener à d'autres avantages.

A cet effet, est donc proposé, selon un premier aspect de l'invention, une pièce inter-arcades (PIA) comportant un corps qui comporte un plateau en forme de U, le plateau comportant une face supérieure configurée pour venir en appui contre une arcade dentaire maxillaire d'un porteur, et une face inférieure configurée pour être orientée vers une arcade dentaire mandibulaire du porteur, et le corps comportant en outre une réglette graduée qui s'étend transversalement au plateau et qui est configurée pour mesurer un écartement entre l'arcade dentaire maxillaire et l'arcade dentaire mandibulaire.

Une PIA désigne un moyen de mesure d'une distance inter-bords libres des incisives maxillaires et mandibulaires antagonistes des mâchoires d'un porteur.

La mesure permet de fixer et de reproduire trois degrés de liberté (rotation, translation et diduction) d'une position mandibulaire, nécessaires pour former, dans une protection intra-buccale (PIB) à fabriquer, un espace de ventilation mâchoires serrées d'un sujet, à partir d'une seule mesure qui peut être relevée directement grâce à la PIA, en particulier ici grâce à la réglette graduée.

Une telle pièce inter-arcades (PIA) permet ainsi un calage des mâchoires, en particulier un positionnement de l'arcade mandibulaire par rapport à l'arcade maxillaire, tout en restant compatible avec une prise d'empreinte numérisée de l'engrènement des arcades maxillaire et mandibulaire, notamment une prise d'empreinte optique, par exemple par une caméra intrabuccale.

La PIA offre en outre un seul et unique plateau de morsure pour l'arcade dentaire mandibulaire et l'arcade dentaire maxillaire.

Le plateau est donc mordu, au moins par endroit, entre l'arcade dentaire maxillaire et l'arcade dentaire mandibulaire du porteur.

Par exemple, la face inférieure est configurée pour venir en appui contre au moins une partie de l'arcade dentaire mandibulaire du porteur.

La PIA comprend également une partie mandibulaire, i.e. la réglette graduée, configurée pour déterminer une hauteur d'espace libre à laisser entre les arcades pour former un espace de ventilation souhaité dans une protection intra-buccale à fabriquer.

Cette réglette graduée est par exemple formée d'un seul tenant avec le corps de la PIA. La PIA peut éventuellement comporter un volet vestibulaire postérieur, par exemple un volet vestibulaire postérieur maxillaire et/ou un volet vestibulaire postérieur mandibulaire, configuré pour renforcer une stabilité de la PIA tout en permettant la prise d'empreinte numérisée. En effet, techniquement, la prise d'empreinte numérisée de l'engrènement des arcades maxillaire et mandibulaire peut concerner uniquement une à deux faces vestibulaires de dents antagonistes latérales. Il n'est pas nécessaire d'avoir accès à l'ensemble des faces vestibulaires des dents antagonistes latérales. Un tel volet vestibulaire postérieur, maxillaire et/ou mandibulaire, est donc par exemple configuré pour laisser accès à des faces vestibulaires de deux ou trois dents antagonistes latérales.

Par exemple, la réglette graduée comporte au moins une graduation configurée pour positionner l'arcade dentaire mandibulaire selon une ouverture déterminée par rapport à l'arcade dentaire maxillaire.

Par exemple, la réglette graduée s'étend depuis la face inférieure du plateau.

Par exemple, la réglette graduée comporte deux piliers définissant entre eux une fenêtre. Selon un exemple de réalisation, le corps comporte en outre un rebord antérieur configuré pour caler au moins une incisive maxillaire du porteur, le rebord antérieur s'étendant transversalement au plateau depuis la face supérieure.

Selon un exemple de réalisation, le corps comporte une languette de manipulation. Par exemple, la languette de manipulation s'étend dans un prolongement du plateau. Par exemple, la languette a une épaisseur sensiblement égale à une épaisseur du plateau.

Par exemple, la languette comporte une racine par laquelle elle est reliée au plateau. Par exemple, la languette comporte une extrémité libre, opposée à sa racine.

Par exemple, l'extrémité libre et la racine de la languette définissent entre elles une longueur de la languette.

L'épaisseur de la languette est ainsi une dimension prise orthogonalement à sa longueur.

Par exemple, la languette a une largeur, mesurée orthogonalement à son épaisseur et sa longueur.

Par exemple, une largeur de la languette prise à son extrémité libre est inférieure à une largeur de la languette prise à sa racine.

Par exemple, la languette a une forme de partie d'ellipse.

Selon un exemple de réalisation, la pièce inter-arcades comporte au moins un bourrelet recouvrant au moins une partie du corps.

Par exemple, le corps comporte en outre une gouttière de rétention configurée pour favoriser un ancrage du bourrelet sur le corps.

Selon un exemple de réalisation, le corps comporte en outre un volet lingual mandibulaire, le volet lingual mandibulaire s'étendant depuis la face inférieure du plateau.

Selon un exemple de réalisation, au moins une partie du corps comporte des perforations.

Selon un exemple de réalisation, le corps comporte en outre au moins une cale antérieure mandibulaire configurée pour former une butée pour au moins une incisive de l'arcade dentaire mandibulaire du porteur.

Une telle cale permet en outre de mieux garantir un écartement minimum entre les incisives maxillaires et mandibulaires d'un porteur, et par conséquent un espace de ventilation suffisant.

Par exemple, la cale antérieure mandibulaire s'étend depuis la face inférieure du plateau. Par exemple, la cale est centrée par rapport à la réglette graduée.

Par exemple, la cale a une hauteur constante par rapport à la face inférieure du plateau. Par exemple, la hauteur de la cale est comprise entre 1 mm et 8 mm, par exemple d'environ 2 mm ou 4 mm.

L'invention concerne aussi, selon un deuxième aspect, une utilisation d'une pièce inter-arcades, comportant tout ou partie des caractéristiques décrites précédemment, pour positionner et caler l'arcade mandibulaire par rapport à l'arcade maxillaire du porteur et réaliser une prise d'empreinte intrabuccale.

Enfin, l'invention concerne, selon un troisième aspect, un procédé de fabrication d'une protection intra-buccale (PIB) avec la pièce inter-arcades (PIA) comportant tout ou partie des caractéristiques décrites précédemment.

Le procédé comporte par exemple au moins :
- Une étape de mise en place de la PIA dans la bouche du porteur, la face supérieure du plateau venant en butée contre l'arcade dentaire maxillaire du porteur ;
- Une étape de placement de l'arcade dentaire mandibulaire par rapport à l'arcade dentaire maxillaire selon un écartement voulu ;
- Une étape de relevé d'une mesure d'écartement entre l'arcade dentaire maxillaire et l'arcade dentaire mandibulaire du porteur en fonction de la réglette graduée ; et
- Une étape de prise d'empreinte intrabuccale d'un engrènement de faces vestibulaires de dents latérales maxillaires et mandibulaires.

Dans un exemple de mise en oeuvre, l'étape de mise en place de la PIA dans la bouche du porteur comporte une étape de mise en butée d'au moins une incisive maxillaire du porteur contre le rebord antérieur du corps.

Dans un exemple de mise en oeuvre, l'étape de prise d'empreinte intrabuccale d'un engrènement de faces vestibulaires de dents latérales maxillaires et mandibulaires comporte une étape d'enregistrement intrabuccal de l'engrènement de faces vestibulaires de dents latérales maxillaires et mandibulaires.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
- la figure 1 représente la PIA selon un premier mode de réalisation ;
- la figure 2 représente la PIA selon un deuxième mode de réalisation ;
- la figure 3 présente la PIA selon un troisième mode de réalisation ; et
- la figure 4 présente la PIA selon un quatrième mode de réalisation.

Les éléments identiques représentés sur les figures précitées sont identifiés par des références numériques identiques.

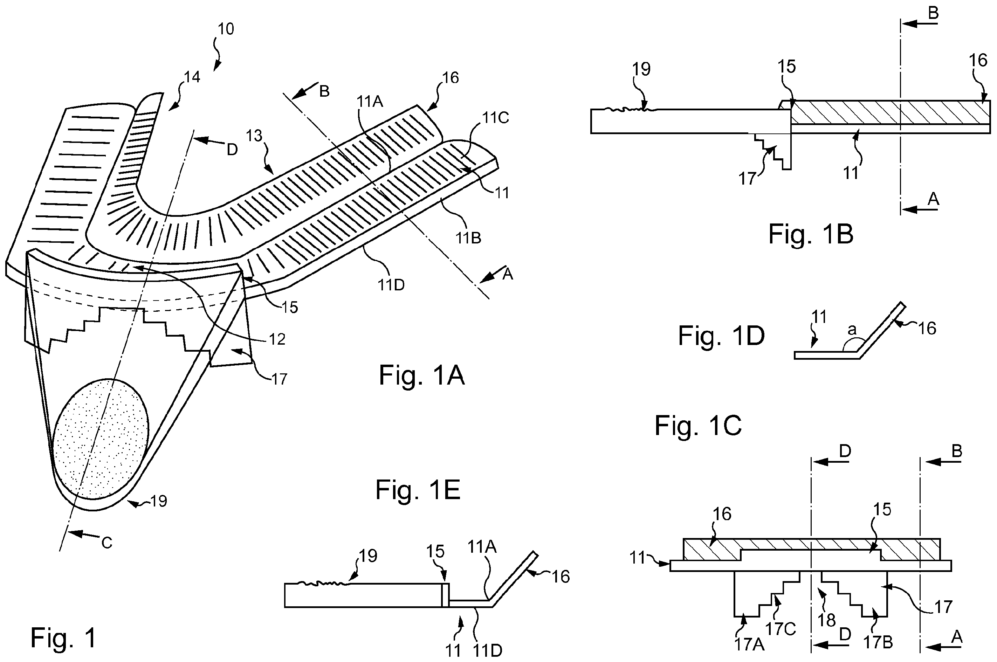

La figure 1 présente une pièce inter-arcades (PIA) selon un premier exemple de réalisation.

Dans la figure 1, la figure 1A montre une vue en perspective de la PIA, la figure 1B montre une vue de profil, la figure 1C montre une vue de face, la figure 1D montre une vue selon la coupe A-B, et la figure 1E montre une vue selon la coupe C-D.

Une PIA est configurée pour être mise en place dans la bouche d'un porteur qui a une arcade dentaire maxillaire et une arcade dentaire mandibulaire (non représenté).

La PIA comporte notamment un corps 10.

Le corps 10 comporte principalement un plateau 11 en forme de U. Le plateau 11 comporte pour cela une partie antérieure 12, et deux branches 13, 14 s'étendant depuis la partie antérieure 12.

Le plateau 11 est configuré pour être placé entre les arcades dentaires maxillaire et mandibulaire d'un individu, et caler les dents de l'arcade dentaire maxillaire.

Ainsi, le plateau 11 est considéré comme horizontal, et il sert ici de plan de référence. Par définition, le plateau 11 comporte un bord interne 11a et un bord externe 11b qui délimitent la forme de U du plateau 11.

Le bord interne 11a et le bord externe 11b ont par exemple tous deux une forme de U. Par exemple le bord interne 11a peut être parallèle au bord externe 11b.

En particulier, le plateau 11 peut être plat et uniforme.

Par exemple, le plateau 11 comporte une face supérieure 11c configurée pour recevoir l'arcade dentaire maxillaire, et une face inférieure 11d configurée pour optionnellement recevoir l'arcade dentaire mandibulaire.

Par exemple, la face inférieure est parallèle à la face supérieure.

Le plateau 11 en forme de « U » présente par exemple une épaisseur constante comprise entre 1 mm et 5 mm, par exemple de 2 mm. Cette épaisseur permet d'une part, de conserver une épaisseur minimale entre les faces occlusales des dernières molaires antagonistes, par exemple 2 mm, et d'autre part, de servir de point de référence pour choisir la hauteur de l'espace de ventilation mesurées verticalement entre le bord libre des incisives maxillaires et mandibulaires antagonistes.

Le corps 10 comporte en outre ici un rebord antérieur 15 configuré pour caler au moins une incisive maxillaire du porteur.

Par exemple, le rebord antérieur 15 s'étend transversalement au plateau 11 depuis la face supérieure 11c, et en particulier depuis la partie antérieure 12 du plateau 11. Ainsi, le rebord antérieur 15 est ici considéré comme vertical.

Le rebord antérieur 15 est notamment configuré pour abuter les incisives maxillaires du porteur, qui sont logées, voire bloquées, par le plateau 11 et le rebord antérieur 15.

Le rebord antérieur 15 est ici formé d'une paroi arquée selon une partie du bord externe 11b de la partie antérieure 12 du plateau 11, et en l'occurrence d'épaisseur et de hauteur constante par rapport à la face supérieure 11c du plateau 11.

Le corps 10 comporte en outre ici un volet lingual maxillaire 16.

Le volet lingual maxillaire 16 s'étend ici depuis le bord interne 11a du plateau 11, et en particulier tout le long du bord interne 11a du plateau 11.

Le volet lingual maxillaire 16 a par exemple ici une forme de U également.

Il a par exemple une même épaisseur que le plateau 11 de sorte qu'il forme une continuité du plateau 11.

En particulier, le volet lingual maxillaire 16 est incliné par rapport au plateau 11.

Par exemple, le volet lingual maxillaire 16 définit un angle « a » avec le plateau 11, et par exemple l'angle « a » est compris entre environ 90° et 180° (exclu). Par exemple, dans le présent exemple de réalisation, l'angle « a » vaut environ 120°.

Une telle inclinaison permet notamment une meilleure adaptation de la PIA avec un palais de la bouche du porteur.

Le corps 10 comporte notamment aussi ici une réglette graduée 17.

La réglette graduée 17 est configurée pour mesurer un écartement entre l'arcade dentaire maxillaire et l'arcade dentaire mandibulaire du porteur.

La réglette graduée 17 s'étend par exemple transversalement au plateau 11, en particulier depuis la face inférieure 11d, et en particulier ici depuis la partie antérieure 12 du plateau 11.

Ainsi, la réglette graduée 17 est aussi considérée ici comme une paroi verticale.

Pour cela, la réglette graduée 17 comporte au moins une graduation 17c configurée pour positionner l'arcade dentaire mandibulaire selon une ouverture déterminée par rapport à l'arcade dentaire maxillaire.

Dans le présent exemple de réalisation, la graduation 17c comporte un palier, comme décrit plus bas.

Dans le présent exemple de réalisation, la réglette graduée 17 est formée d'une paroi qui est arquée selon une partie du bord externe 11b de la partie antérieure 12 du plateau 11.

De plus, la réglette graduée 17 comporte ici une fenêtre 18, qui est ici centrée, en particulier centrée par rapport à la paroi verticale formant la réglette graduée 17, et plus généralement par rapport au corps 10 de la PIA de sorte à être centrée par rapport aux incisives du porteur.

Par conséquent, la réglette graduée 17 comporte ici deux piliers 17a, 17b qui délimitent entre eux la fenêtre 18.

En outre, chaque pilier 17a, 17b comporte ici au moins un palier formant une graduation 17c, et en particulier ici plusieurs paliers.

Dans un tel exemple de réalisation dans lequel la réglette graduée 17 comporte une fenêtre 18, l'au moins une graduation 17c est alors de préférence formée sur un bord délimitant la fenêtre. Ainsi, ici, au moins une graduation 17c est formée sur un bord d'un premier des deux piliers 17a qui fait face à un bord d'un deuxième des deux piliers 17b. En outre, ledit bord dudit deuxième pilier 17b comporte alors de préférence au moins une graduation également.

Les deux bords des piliers 17a, 17b qui se font face ont ainsi ici une forme d'escalier.

Enfin, le corps 10 comporte une languette de manipulation 19.

La languette de manipulation 19 s'étend dans un prolongement du plateau 11.

Une telle languette de manipulation 19 sert à manipuler et positionner la PIA 10 dans la bouche du porteur.

Le corps de la PIA est par exemple formé d'un matériau, en particulier en un matériau non thermo-modelable en bouche.

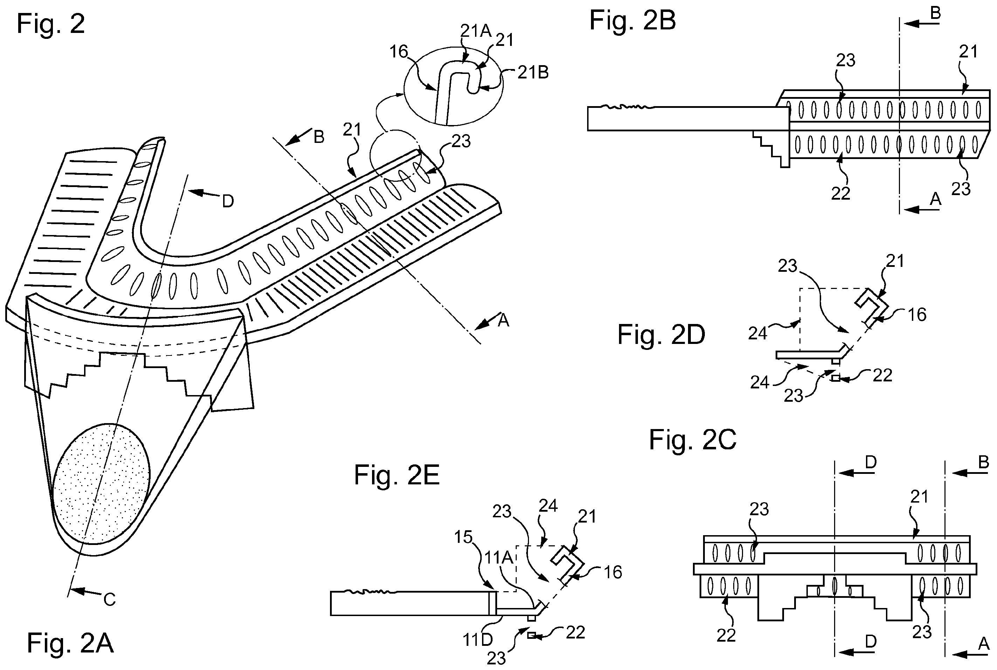

Dans l'exemple de réalisation de la figure 1, le corps 10 de la PIA est considéré comme plein, c'est-à-dire dépourvu de perforations, comme décrit ci-après en lien avec la figure 2.

Dans l'exemple de réalisation de la figure 2, la PIA telle que représentée figure 1 comporte en outre différentes options envisageables.

De même que pour la figure 1, dans la figure 2, la figure 2A montre une vue en perspective de la PIA, la figure 2B montre une vue de profil, la figure 2C montre une vue de face, la figure 2D montre une vue selon la coupe A-B, et la figure 2E montre une vue selon la coupe C-D.

Bien que la PIA de la figure 2 comporte l'ensemble des options décrites ici, une PIA selon un mode de réalisation de l'invention peut ne comporter qu'une de ces options, ou plusieurs de ces options, selon toutes combinaisons d'entre elles.

Ainsi, ici, sur l'exemple de la figure 2, selon une option intéressante, le corps 10 de la PIA comporte un bourrelet 24 qui enrobe au moins une partie du corps 10 de la PIA. Le bourrelet 24 est ici schématisé sur les figures 2D et 2E seulement par simplicité.

Le bourrelet 24 est configuré pour renforcer un maintien en position de la PIA entre les arcades maxillaire et mandibulaire.

Il est en outre configuré pour ajuster un écartement entre les mâchoires pour obtenir un espace ventilatoire voulu.

Le bourrelet 24 est par exemple formé en un matériau à empreinte intra-buccale.

Par exemple, le matériau à empreinte intra-buccale comporte une silicone, ou autre.

Selon un autre exemple, le matériau à empreinte intra-buccale peut en outre comporter un matériau thermo-modelable, par exemple un copolymère de polyéthylène et d'acétate de polyvinyle, ou autre, notamment si le bourrelet enrobe les faces supérieure et inférieure (maxillaire et mandibulaire) du corps.

Le cas échéant, une utilisation de la PIA peut impliquer, au préalable, de ramollir le matériau thermo-modelable dans une eau chauffée, par exemple portée à ébullition, puis de le refroidir au moins superficiellement, par exemple en trempant la PIA une à deux secondes dans une eau à température ambiante, ou plus froide, avant d'être placée en bouche.

Selon une option intéressante, la PIA peut en outre comporter un matériau adhésif, notamment appliqué sur le corps 10 de la PIA.

Un tel matériau adhésif favorise un maintien du bourrelet 24 sur le corps 10 de la PIA. Dans le présent exemple de réalisation schématisé sur les figures 2D et 2E, le bourrelet 24 comporte une couche supérieure recouvrant au moins une partie de la face supérieure 11c du plateau et une couche inférieure recouvrant au moins une partie de la face inférieure 11d du plateau.

Les couches supérieure et inférieure sont ici représentées très schématiquement, mais elles peuvent avoir tout type de profil en fonction des besoins et/ou d'une morphologie de mâchoire.

Selon une autre option, le corps 10 peut en outre comporter une gouttière de rétention 21.

La gouttière de rétention 21 est par exemple configurée pour favoriser un ancrage du bourrelet 24 sur le corps de la PIA.

En particulier, sur la figure 2, la gouttière de rétention 21 comporte deux parois : une première paroi 21a inclinée par rapport au volet lingual maxillaire 16, et une deuxième paroi 21b inclinée par rapport à la première paroi 21a, les parois étant inclinées en direction de la face supérieure 11c du plateau 11.

Sur la figure 2, selon une autre option intéressante, le corps 10 comporte en outre un volet lingual mandibulaire 22.

Dans le présent exemple de réalisation, le volet lingual mandibulaire 22 s'étend depuis la face inférieure 11d du plateau 11, ici sensiblement orthogonalement.

Plus particulièrement ici, le volet lingual mandibulaire 22 s'étend depuis le bord interne 11a du plateau 11.

Enfin, sur la figure 2, selon encore une autre option intéressante, le corps 10 comporte des perforations 23.

Une telle perforation est aussi configurée pour favoriser un ancrage du bourrelet 24 sur le corps 10 de la PIA.

Au moins l'une des perforations 23 a ici une forme oblongue, mais une perforation peut avoir tout type de forme, par exemple ronde.

Ici, les perforations 23 ont toutes la même forme.

Dans un exemple de réalisation, au moins le volet lingual maxillaire 16 peut comporter des perforations 23, comme représenté ici.

Dans un autre exemple envisageable, représenté ici également, en complément ou en alternative, le volet lingual mandibulaire 22 peut aussi comporter des perforations 23.

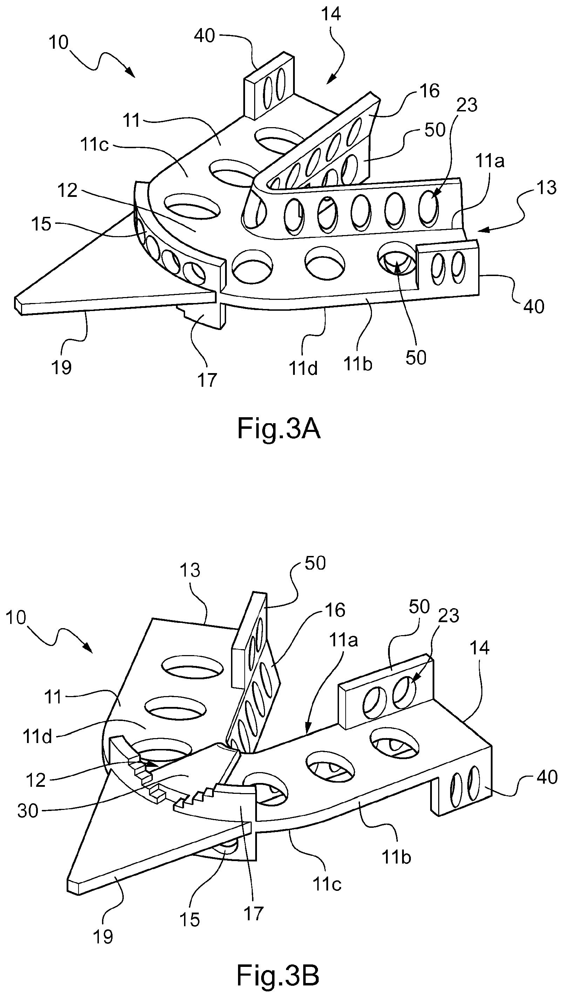

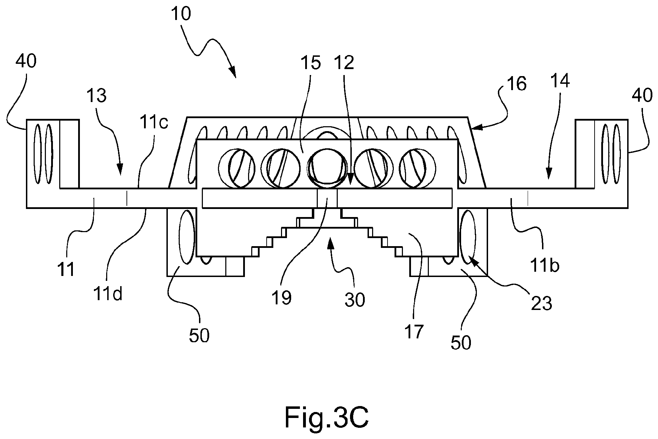

La figure 3 présente une pièce inter-arcades selon un troisième exemple de réalisation. Dans la figure 3, la figure 3A montre en perspective une vue de dessus de la PIA, la figure 3B montre en perspective une vue de dessous de la PIA, et la figure 3C montre une vue de face de la PIA.

La PIA du troisième exemple de réalisation diffère de la PIA du premier exemple de réalisation en ce que le corps 10 comporte en outre au moins une cale antérieure mandibulaire 30.

La cale antérieure mandibulaire 30 est notamment configurée pour former une butée pour au moins une incisive de l'arcade dentaire mandibulaire du porteur.

Une telle cale 30 permet par exemple de mieux garantir un écartement minimum entre les incisives maxillaires et mandibulaires d'un porteur, et par conséquent un espace de ventilation suffisant.

L'au moins une cale antérieure mandibulaire 30 s'étend depuis la face inférieure 11d du plateau 11, et notamment de la partie antérieure 12.

En l'occurrence, la PIA comporte ici une seule cale antérieure mandibulaire 30 s'étendant sur la face inférieure 11d du plateau 11 avec une hauteur constante, par exemple d'environ 2 mm, ou 4 mm.

Dans cet exemple de réalisation, la PIA comporte en outre au moins un volet parmi un volet vestibulaire postérieur maxillaire 40 ou un volet vestibulaire postérieur mandibulaire 50.

L'au moins un volet vestibulaire postérieur maxillaire 40 et l'au moins un volet vestibulaire postérieur mandibulaire 50 sont configurés pour renforcer en stabilité la PIA tout en permettant une prise d'empreinte numérisée.

L'au moins un volet vestibulaire postérieur maxillaire 40 et l'au moins un volet vestibulaire postérieur mandibulaire 50 sont configurés ici pour laisser accès à des faces vestibulaires de deux ou trois dents antagonistes latérales.

En l'occurrence, la PIA comporte ici un volet vestibulaire postérieur maxillaire 40 et un volet vestibulaire postérieur mandibulaire 50 sur chacune des deux branches 13 et 14 du plateau 11 en forme de U.

Les deux volets vestibulaire postérieur maxillaire 40 s'étendent ici transversalement au plateau 11, depuis la face supérieure 11c, et en particulier depuis le bord externe 11b. Les deux volets vestibulaire postérieur mandibulaire 50 s'étendent ici transversalement au plateau 11, depuis la face inférieure 11d, et en particulier depuis le bord interne 11a.

Enfin, sur la figure 3, selon encore une autre option intéressante, le corps 10 comporte des perforations 23.

Au moins l'un parmi la cale antérieure mandibulaire 30, le volet vestibulaire postérieur maxillaire 40 ou le volet vestibulaire postérieur mandibulaire 50 peut bien entendu être combiné à l'un des exemples de réalisation des figures 1 ou 2.

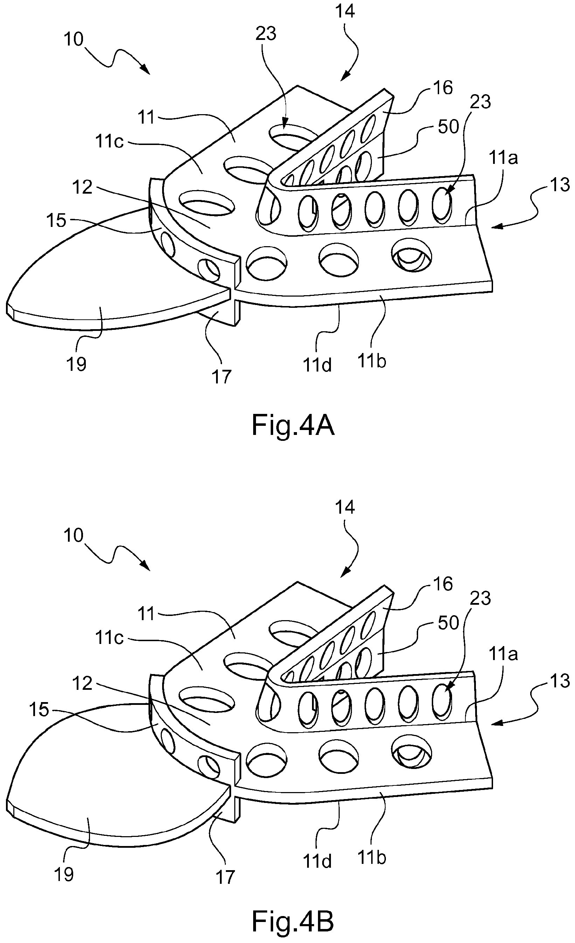

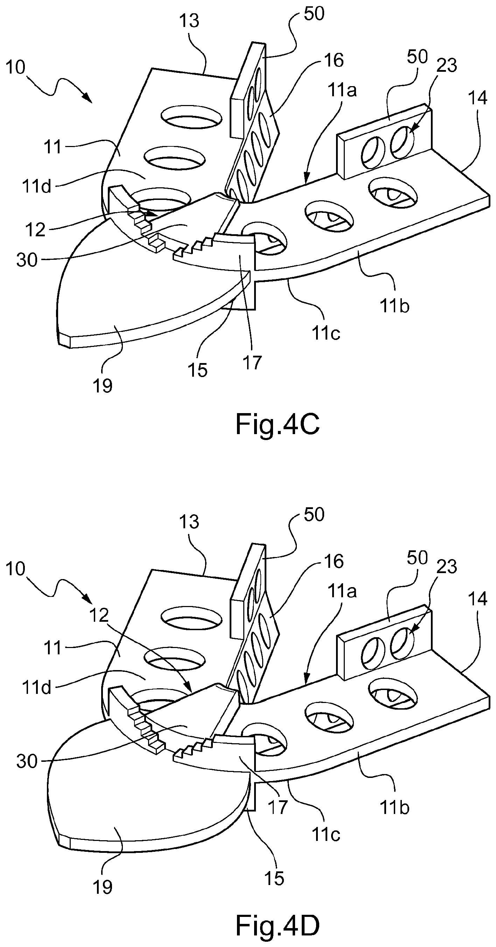

La figure 4 présente un quatrième exemple de réalisation d'une pièce inter-arcades selon deux variantes.

La figure 4 comporte d'une part les figures 4A et 4B qui montrent une vue de dessus des deux variantes et d'autre part les figures 4C et 4D qui montrent une vue de dessous des deux variantes.

Les deux variantes représentées différent l'une de l'autre de par l'épaisseur de la cale antérieure mandibulaire 30.

Dans le présent exemple de réalisation, la cale 30 d'une première des deux variantes (Figures 4A et 4C) a ici une épaisseur de 2 mm.

Dans le présent exemple de réalisation, la cale 30 d'une deuxième des deux variantes (Figures 4B et 4D) a ici une épaisseur de 4 mm.

Comme pour les exemples précédents, la languette 19 a une épaisseur sensiblement égale à une épaisseur du plateau.

La languette 19 comporte une racine par laquelle elle est reliée au plateau.

La languette 19 comporte une extrémité libre, opposée à sa racine.

L'extrémité libre et la racine de la languette 19 définissent entre elles une longueur de la languette.

La languette 19 a une largeur mesurée orthogonalement à son épaisseur et sa longueur. La largeur de la languette 19 prise à son extrémité libre est ici inférieure à une largeur de la languette prise à sa racine.

En revanche, la PIA de ces deux variantes diffère de la PIA du troisième exemple de réalisation notamment de par la forme de languette 19.

La languette 19 a ici une forme de partie d'ellipse.

La forme de partie d'ellipse de la languette de manipulation 19 permet notamment une meilleure saisie, facilitant une insertion et/ou un retrait de la PIA d'une bouche d'un individu.

En outre, la PIA de ces deux variantes ne comporte pas de volet vestibulaire postérieur maxillaire 40, mais il comporte un volet lingual maxillaire 16 et un volet vestibulaire postérieur mandibulaire 50.

Sur ces figures, il est à noter que le corps 10 comporte des perforations 23 comme le mode de réalisation de la figure 3.

Une PIA selon l'un quelconque des exemples de réalisation décrits ci-dessus est particulièrement intéressante pour une prise d'empreinte intrabuccale, notamment une prise d'empreinte optique, par exemple par une caméra intrabuccale, afin de réaliser une PIB sur-mesure.

Pour cela, un procédé de fabrication d'une PIB avec une PIA selon un exemple de mise en oeuvre de l'invention se déroule par exemple comme suit.

La PIA est mise en place dans la bouche d'un porteur, la face supérieure 11c du plateau 11 étant en appui sur une arcade dentaire maxillaire du porteur.

Par exemple, les incisives maxillaires sont en appui contre le rebord antérieur 15, et/ou une extrémité des branches du U sont calées en fond de mâchoire afin de garantir au moins 2 mm d'écart entre les faces occlusales des dernières molaires antagonistes. Le plateau est donc mordu, au moins par endroit, entre l'arcade dentaire maxillaire et l'arcade dentaire mandibulaire du porteur.

Si un bourrelet 24 est présent, au moins en partie sur la face supérieure du corps 10, il facilite la rétention de la PIA sur l'arcade maxillaire.

Une arcade dentaire mandibulaire du porteur est ensuite positionnée, par exemple en fonction d'un espace ventilatoire voulu.

Par exemple, l'arcade dentaire mandibulaire du porteur est resserrée, par exemple en mordant le bourrelet 24, notamment si au moins une partie de bourrelet 24 est présente sur la face inférieure du corps 10, jusqu'à ce que des incisives de l'arcade dentaire mandibulaire du porteur s'alignent sur une graduation 17c voulue.

Le procédé comporte ensuite une étape de relevé d'une mesure d'écartement entre l'arcade dentaire maxillaire et l'arcade dentaire mandibulaire du porteur en fonction de la réglette graduée 17.

Ensuite, le procédé comporte une étape de prise d'empreinte, par exemple par un scan intrabuccal, d'un engrènement de faces vestibulaires de dents latérales maxillaires et mandibulaires.

## Revendications

1. Pièce inter-arcades comportant un corps (10) qui comporte un plateau (11) en forme de U, le plateau (11) comportant une face supérieure (11c) configurée pour venir en appui contre une arcade dentaire maxillaire d'un porteur, et une face inférieure (11d) configurée pour être orientée vers une arcade dentaire mandibulaire du porteur, et le corps (10) comportant en outre une réglette graduée (17),
**caractérisée en ce que** la réglette graduée (17) s'étend transversalement au plateau (11), et **en ce que** la réglette graduée (17) s'étend depuis la face inférieure (11d) du plateau (11) et est configurée pour mesurer un écartement entre l'arcade dentaire maxillaire et l'arcade dentaire mandibulaire.

2. Pièce inter-arcades selon la revendication 1, **caractérisée en ce que** la réglette graduée (17) comporte au moins une graduation (17c) configurée pour positionner l'arcade dentaire mandibulaire selon une ouverture déterminée par rapport à l'arcade dentaire maxillaire.

3. Pièce inter-arcades selon l'une quelconque des revendications 1 ou 2, **caractérisée en ce que** la réglette graduée (17) comporte deux piliers (17a, 17b) définissant entre eux une fenêtre (18).

4. Pièce inter-arcades selon l'une quelconque des revendications 1 à 3, **caractérisée en ce que** le corps (10) comporte en outre un rebord antérieur (15) configuré pour caler au moins une incisive maxillaire du porteur, le rebord antérieur (15) s'étendant transversalement au plateau (11) depuis la face supérieure (11c).

5. Pièce inter-arcades selon l'une quelconque des revendications 1 à 4, **caractérisée en ce que** le corps (10) comporte une languette de manipulation (19).

6. Pièce inter-arcades selon la revendication 5, **caractérisée en ce que** la languette de manipulation (19) s'étend dans un prolongement du plateau (11).

7. Pièce inter-arcades selon l'une quelconque des revendications 1 à 6, **caractérisée en ce qu'**elle comporte au moins un bourrelet (24) recouvrant au moins une partie du corps (10).

8. Pièce inter-arcades selon la revendications 7, **caractérisée en ce que** le corps (10) comporte en outre une gouttière de rétention (21) configurée pour favoriser un ancrage du bourrelet (24) sur le corps (10).

9. Pièce inter-arcades selon l'une quelconque des revendications 1 à 8, **caractérisée en ce que** le corps (10) comporte en outre un volet lingual mandibulaire (22), le volet lingual mandibulaire (22) s'étendant depuis la face inférieure (11d) du plateau (11).

10. Pièce inter-arcades selon l'une quelconque des revendications 1 à 9, **caractérisée en ce qu'**au moins une partie du corps (10) comporte des perforations (23).

11. Utilisation d'une pièce inter-arcades selon l'une quelconque des revendications 1 à 10 pour positionner et caler l'arcade mandibulaire par rapport à l'arcade maxillaire du porteur et réaliser une prise d'empreinte intrabuccale.

12. Procédé de fabrication d'une protection intra-buccale (PIB) avec la pièce inter-arcades selon l'une quelconque des revendications 1 à 10, comportant au moins :
- Une étape de mise en place de la PIA dans la bouche du porteur, la face supérieure (11c) du plateau (11) venant en butée contre l'arcade dentaire maxillaire du porteur ;
- Une étape de placement de l'arcade dentaire mandibulaire par rapport à l'arcade dentaire maxillaire selon un écartement voulu ;
- Une étape de relevé d'une mesure d'écartement entre l'arcade dentaire maxillaire et l'arcade dentaire mandibulaire du porteur en fonction de la réglette graduée (17) ; et
- Une étape de prise d'empreinte intrabuccale d'un engrènement de faces vestibulaires de dents latérales maxillaires et mandibulaires.

13. Procédé selon la revendication 12, dans lequel l'étape de mise en place de la PIA dans la bouche du porteur comporte une étape de mise en butée d'au moins une incisive maxillaire du porteur contre le rebord antérieur (15) du corps (10).

## Patentansprüche

1. Bogenzwischenstück, das einen Körper (10) beinhaltet, der eine Platte (11) in U-Form beinhaltet, wobei die Platte (11) eine Oberseite (11c) beinhaltet, die konfiguriert ist, um sich an einen maxillären Zahnbogen eines Trägers anzulegen, und eine Unterseite (11d), die konfiguriert ist, um zu einem mandibulären Zahnbogen des Trägers ausgerichtet zu sein, und der Körper (10) weiter ein skaliertes Lineal (17) beinhaltet,
**dadurch gekennzeichnet, dass** sich das skalierte Lineal (17) quer zu der Platte (11) erstreckt, und dadurch, dass sich das skalierte Lineal (17) von der Unterseite (11d) der Platte (11) aus erstreckt und konfiguriert ist, um einen Abstand zwischen dem maxillären Zahnbogen und dem mandibulären Zahnbogen zu messen.

2. Bogenzwischenstück nach Anspruch 1, **dadurch gekennzeichnet, dass** das skalierte Lineal (17) mindestens eine Skalierung (17c) beinhaltet, konfiguriert ist, um den mandibulären Zahnbogen gemäß einer bestimmten Öffnung in Bezug auf den maxillären Zahnbogen zu positionieren.

3. Bogenzwischenstück nach einem der Ansprüche 1 oder 2, **dadurch gekennzeichnet, dass** das skalierte Lineal (17) zwei Säulen (17a, 17b) beinhaltet, die zwischen sich ein Fenster (18) definieren.

4. Bogenzwischenstück nach einem der Ansprüche 1 bis 3, **dadurch gekennzeichnet, dass** der Körper (10) weiter einen vorderen Rand (15) beinhaltet, der konfiguriert ist, um mindestens einen maxillären Schneidezahn des Trägers zu stützen, wobei sich der vordere Rand (15) von der Oberseite (11c) quer zu der Platte (11) erstreckt.

5. Bogenzwischenstück nach einem der Ansprüche 1 bis 4, **dadurch gekennzeichnet, dass** der Körper (10) eine Grifflasche (19) beinhaltet.

6. Bogenzwischenstück nach Anspruch 5, **dadurch gekennzeichnet, dass** sich die Grifflasche (19) in einer Verlängerung der Platte (11) erstreckt.

7. Bogenzwischenstück nach einem der Ansprüche 1 bis 6, **dadurch gekennzeichnet, dass** es mindestens einen Wulst (24) beinhaltet, der mindestens einen Teil des Körpers (10) bedeckt.

8. Bogenzwischenstück nach Anspruch 7, **dadurch gekennzeichnet, dass** der Körper (10) weiter eine Halterinne (21) beinhaltet, die konfiguriert ist, um eine Verankerung des Wulstes (24) an dem Körper (10) zu fördern.

9. Bogenzwischenstück nach einem der Ansprüche 1 bis 8, **dadurch gekennzeichnet, dass** der Körper (10) weiter eine mandibuläre Lingualklappe (22) beinhaltet, wobei sich die mandibuläre Lingualklappe (22) von der Unterseite (11d) der Platte (11) aus erstreckt.

10. Bogenzwischenstück nach einem der Ansprüche 1 bis 9, **dadurch gekennzeichnet, dass** mindestens ein Teil des Körpers (10) Perforationen (23) beinhaltet.

11. Verwendung eines Bogenzwischenstücks nach einem der Ansprüche 1 bis 10 zum Positionieren und Stützen des mandibulären Bogens in Bezug zum maxillären Bogen des Trägers und Anfertigen einer intraoralen Abformung.

12. Verfahren zum Herstellen eines intraoralen Schutzes (IOS) mit dem Bogenzwischenstück nach einem der Ansprüche 1 bis 10, das mindestens beinhaltet:
- Einen Schritt zum Platzieren des BZS im Mund des Trägers, wobei die Oberseite (11c) der Platte (11) am maxillären Zahnbogen des Trägers zum Anliegen kommt;
- Einen Schritt zum Platzieren des mandibulären Zahnbogens in Bezug zum maxillären Zahnbogen in einem gewünschten Abstand;
- Einen Schritt zum Erheben eines Abstandsmaßes zwischen dem maxillären Zahnbogen und dem mandibulären Zahnbogen des Trägers in Abhängigkeit vom skalierten Lineal (17); und
- Einen Schritt zum intraoralen Abformen eines Eingriffs von vestibulären Flächen lateraler maxillärer und mandibulärer Zähne.

13. Verfahren nach Anspruch 12, wobei der Schritt zum Platzieren des BZS in den Mund des Trägers einen Schritt zum Anlegen mindestens eines maxillären Schneidezahns des Trägers an den vorderen Rand (15) des Körpers (10) beinhaltet.

## Claims

1. Inter-arch component comprising a body (10) which comprises a U-shaped plate (11), the plate (11) comprising an upper face (11c) configured to bear against an upper dental arch of a wearer, and a lower face (11d) configured to be oriented towards a lower dental arch of the wearer, and the body (10) further comprising a graduated ruler (17),
**characterized in that** the graduated ruler (17) extends transversely to the plate (11), and **in that** the graduated ruler (17) extends from the lower face (11d) of the plate (11) and is configured to measure a spacing between the upper dental arch and the lower dental arch.

2. Inter-arch component according to claim 1, **characterised in that** the graduated ruler (17) comprises at least one graduation (17c) configured to position the lower dental arch according to a determined opening with respect to the upper dental arch.

3. Inter-arch component according to any one of claims 1 or 2, **characterised in that** the graduated ruler (17) comprises two pillars (17a, 17b) defining an aperture (18) therebetween.

4. Inter-arch component according to any one of claims 1 to 3, **characterised in that** the body (10) further comprises an anterior rim (15) configured to wedge at least one maxillary incisor of the wearer, the anterior rim (15) extending transversely to the plate (11) from the upper face (11c).

5. Inter-arch component according to any one of claims 1 to 4, **characterised in that** the body (10) comprises a handling tab (19).

6. Inter-arch component according to claim 5, **characterised in that** the handling tab (19) extends in an extension of the plate (11).

7. Inter-arch component according to any one of claims 1 to 6, **characterised in that** it comprises at least one bead (24) covering at least one portion of the body (10).

8. Inter-arch component according to claim 7, **characterised in that** the body (10) further comprises a retention gutter (21) configured to promote anchorage of the bead (24) on the body (10).

9. Inter-arch component according to any one of claims 1 to 8, **characterised in that** the body (10) further comprises a mandibular lingual flap (22), the mandibular lingual flap (22) extending from the lower face (11d) of the plate (11).

10. Inter-arch component according to any one of claims 1 to 9, **characterised in that** at least one portion of the body (10) comprises perforations (23).

11. Use of an inter-arch component according to any one of claims 1 to 10 for positioning and wedging the mandibular arch with respect to the maxillary arch of the wearer and taking an intraoral impression.

12. Method for manufacturing an intraoral protector (IOP) with the inter-arch component according to any one of claims 1 to 10, comprising at least:
- a step of placing the IAC in the mouth of the wearer, the upper face (11c) of the plate (11) abutting against the upper dental arch of the wearer;
- a step of placing the lower dental arch with respect to the upper dental arch at a desired spacing;
- a step of reading a measurement of the spacing between the upper dental arch and the lower dental arch of the wearer according to the graduated ruler (17); and
- a step of taking an intraoral impression of meshing of vestibular faces of maxillary and mandibular lateral teeth.

13. Method according to claim 12, wherein the step of placing the IAC in the mouth of the wearer comprises a step of abutting at least one maxillary incisor of the wearer against the anterior rim (15) of the body (10).
